# EUROPEAN PATENT APPLICATION

(11) **EP 4 414 841 A1**
(43) Date of publication of application: **14.08.2024**
(21) Application number: 21969742.2
(22) Date of filing: 31.12.2021
(51) Int. Cl.: G06F 9/50

(54) **COMPUTING TASK PROCESSING APPARATUS AND METHOD, AND ELECTRONIC DEVICE**

(71) Applicant: Huawei Technologies Co., Ltd., Shenzhen, Guangdong 518129 (CN)
(72) Inventor: XU, Tao, Shenzhen, Guangdong 518129 (CN); SHI, Jieke, Shenzhen, Guangdong 518129 (CN); WANG, Xiaoyu, Shenzhen, Guangdong 518129 (CN); ZHENG, Ming, Shenzhen, Guangdong 518129 (CN)
(74) Representative: Thun, Clemens
(86) International application number: PCT/CN2021/143792
(87) International publication number: WO 2023/123395

(57) **Abstract**

A computing task processing apparatus and method, and an electronic device are provided, which relate to the field of data processing technologies. The apparatus includes a general-purpose processor (201) and a dedicated processor (202). The general-purpose processor (201) is coupled to the dedicated processor (202) through a physical interface (203). The general-purpose processor (201) is configured to send a first instruction to the dedicated processor (202) through the physical interface (203), where the first instruction is an instruction in an instruction set of the general-purpose processor (201) and instructs the dedicated processor (202) to process a first computing task. The dedicated processor (202) is configured to: receive the first instruction through the physical interface (203), execute the first instruction, and process the first computing task based on the first instruction. In this way, when the general-purpose processor (201) is a CPU and the dedicated processor (202) is an NPU, the CPU can schedule, through the physical interface (203) coupled between the CPU and the NPU, the NPU to process a computing task without scheduling of a software stack and a system bus, so that overheads of reusing a computing resource of the NPU by the CPU can be reduced, thereby improving efficiency of interaction between the CPU and the NPU.

## Description

### TECHNICAL FIELD

This application relates to the field of data processing technologies, and in particular, to a computing task processing apparatus and method, and an electronic device.

### BACKGROUND

With the rapid development of an artificial intelligence (artificial intelligence, AI) technology, more AI services are deployed on a terminal device. Therefore, requirements for a computing capability of a system on chip (system on chip, SoC) in the terminal device become increasingly high. Currently, a central processing unit (central processing unit, CPU) and a neural-network processing unit (neural-network processing unit, NPU) are usually integrated in the SoC, and the CPU reuses a computing resource of the NPU to perform a computing task related to the AI service.

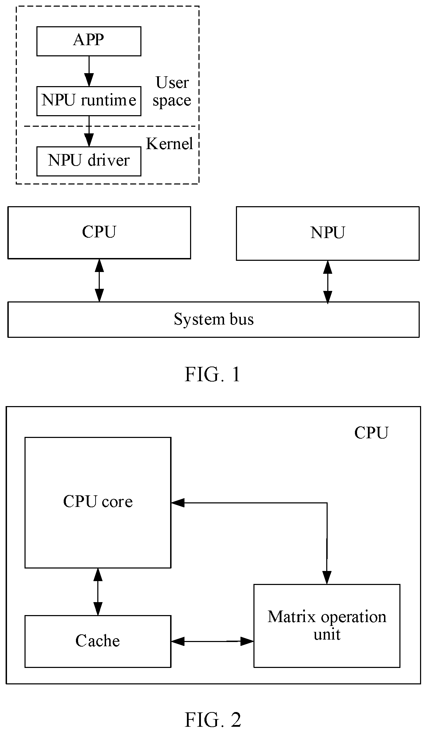

The conventional technology provides an architecture in which a CPU reuses a computing resource of an NPU based on software. As shown in FIG. 1, the architecture includes a system bus, a CPU, and an NPU. The CPU and the NPU are coupled to the system bus. A software stack runs on the CPU. The software stack includes an NPU driver (driver) located in a kernel (kernel), and NPU runtime (runtime) and an application (application, APP) located in user space (user space). Specifically, when the APP generates a computing task, and the CPU needs to reuse a computing resource of the NPU to process the computing task, the APP sends the computing task to the NPU by using the NPU runtime and the NPU driver through the CPU and the system bus, and the NPU processes the computing task when receiving the computing task.

However, in the foregoing process in which the CPU reuses the computing resource of the NPU, the CPU needs to switch between a user mode and a kernel mode, and there are a large quantity of layers in the software stack. Consequently, overheads are high. This is not applicable to a scenario in which a CPU frequently interacts with an NPU.

### SUMMARY

Embodiments of this application provide a computing task processing apparatus and method, and an electronic device, to reduce overheads of reusing a computing resource of an NPU by a CPU, and improve efficiency of interaction between the CPU and the NPU.

To achieve the foregoing objectives, the following technical solutions are used in embodiments of this application.

A first aspect provides a computing task processing apparatus. The apparatus includes a general-purpose processor and a dedicated processor. The general-purpose processor is coupled to the dedicated processor through a physical interface. For example, the general-purpose processor is a CPU, and the dedicated processor is an NPU. The general-purpose processor is configured to send a first instruction to the dedicated processor through the physical interface, where the first instruction is an instruction that is in an instruction set of the general-purpose processor and that is for the dedicated processor, and the first instruction instructs the dedicated processor to process a first computing task. The dedicated processor is configured to: receive the first instruction through the physical interface, execute the first instruction (in other words, the first instruction is an instruction directly received by the dedicated processor through the physical interface, and is not an instruction obtained from a memory in a manner similar to software stack scheduling), and process the first computing task based on the first instruction.

In the foregoing technical solution, the general-purpose processor is coupled to the dedicated processor at a physical layer through the physical interface, so that the general-purpose processor can directly send the first instruction to the dedicated processor through the physical interface, to schedule the dedicated processor to process the first computing task. In other words, the general-purpose processor can directly reuse the dedicated processor through the physical interface. A reusing process does not need to be implemented by using software, so that overheads are low, thereby improving efficiency of interaction between the general-purpose processor and the dedicated processor.

In a possible implementation of the first aspect, the apparatus further includes a cache coupled to the dedicated processor. The cache is configured to store task data of the first computing task. The dedicated processor is configured to: read the task data from the cache and/or cache the task data in the cache. In the foregoing possible implementation, efficiency of reading or storing the task data by the dedicated processor can be improved, thereby improving computing task processing efficiency.

In a possible implementation of the first aspect, the cache is a cache of the general-purpose processor; or the general-purpose processor is coupled to the cache. In the foregoing possible implementation, efficiency of reading data from the cache or storing data in the cache by the general-purpose processor can be improved, and design flexibility of the cache can be further improved.

In a possible implementation of the first aspect, the general-purpose processor and the dedicated processor share a same page table. The page table indicates a mapping relationship between a logical address and a physical address of the task data in the cache. In the foregoing possible implementation, when the general-purpose processor and the dedicated processor read data in the cache or store data in the cache, no additional address translation needs to be performed, so that power consumption can be reduced and data read/write efficiency can be improved.

In a possible implementation of the first aspect, a software stack of the dedicated processor runs on the general-purpose processor. The general-purpose processor is further configured to send an indication message to the dedicated processor by using the software stack, where the indication message indicates the dedicated processor to obtain a second instruction. For example, when an application running on the general-purpose processor generates a computing task, the application invokes the software stack, so that the software stack generates an indication message, and then the general-purpose processor sends the indication message to the dedicated processor through a system bus. The indication message may be an interrupt signal. The general-purpose processor does not sense the second instruction. The dedicated processor is further configured to: after receiving the indication message, obtain the second instruction after parsing the indication message by using the software stack of the dedicated processor, and process a second computing task based on the second instruction, where the second instruction is an instruction in an instruction set of the dedicated processor. In the foregoing possible implementation, the general-purpose processor may further reuse a computing resource of the dedicated processor based on the software stack, and can process another task in a process in which the dedicated processor processes the second computing task, thereby improving resource utilization.

In a possible implementation of the first aspect, a computation amount of the first computing task is less than a computation amount of the second computing task. In the foregoing possible implementation, when the general-purpose processor needs to reuse the dedicated processor to process computing tasks having different computation amounts, the general-purpose processor may reuse the dedicated processor through the physical interface to process a computing task having a small computation amount, and reuse the dedicated processor by using the software stack to process a computing task having a large computation amount. This is because a manner of reusing the dedicated processor by using the software stack is applicable to the computing task having a large computation amount, generally requires long computing time, and is insensitive to scheduling latency. However, a manner of reusing the dedicated processor trough the physical interface is applicable to the computing task having a small computation amount, requires short computing time, and is sensitive to scheduling latency.

In a possible implementation of the first aspect, the first computing task and the second computing task are two concurrent computing tasks. In the foregoing possible implementation, computing task processing efficiency and resource utilization can be improved.

In a possible implementation of the first aspect, the dedicated processor includes a control unit and at least one computing unit. The control unit is configured to: when receiving a plurality of computing tasks, allocate the at least one computing unit to the plurality of computing tasks based on at least one preset parameter of the plurality of computing tasks. The plurality of computing tasks may include only a plurality of computing tasks instructed by one of the first instruction and the second instruction, or may include a plurality of computing tasks instructed by both the first instruction and the second instruction. The at least one preset parameter includes at least one of the following: a priority and a task type. In the foregoing possible implementation, when a plurality of computing tasks are concurrent and computing resources are limited, it can be ensured that a computing task having a high priority or a small computation amount is preferentially processed, and a computing task having a low priority or a large computation amount is processed later, so that the computing task having a high priority or a small computation amount has low processing latency and high processing efficiency.

In a possible implementation of the first aspect, the at least one preset parameter includes the task type. The at least one computing unit includes: a vector operation unit, configured to process a computing task whose task type is a vector operation in the plurality of computing tasks; and a matrix operation unit, configured to process a computing task whose task type is a matrix operation in the plurality of computing tasks. In the foregoing possible implementation, computing task processing efficiency can be improved.

In a possible implementation of the first aspect, the general-purpose processor includes a central processing unit CPU, a graphics processing unit GPU (which may also be referred to as a macro GPU, for example, a GPU integrated with a CPU) having a scheduling function, a digital signal processor DSP having a scheduling function, or the like. The dedicated processor includes at least one of the following: a neural-network processing unit NPU, a digital signal processor DSP, and a graphics processing unit GPU. In the foregoing possible implementation, design flexibility and diversity of the dedicated processor can be improved.

A second aspect provides a computing task processing method, applied to an apparatus including a general-purpose processor and a dedicated processor. The general-purpose processor is coupled to the dedicated processor through a physical interface. The method includes: The general-purpose processor sends a first instruction to the dedicated processor through the physical interface, where the first instruction is an instruction that is in an instruction set of the general-purpose processor and that is for the dedicated processor, and the first instruction instructs the dedicated processor to process a first computing task. The dedicated processor receives the first instruction through the physical interface, executes the first instruction, and processes the first computing task based on the first instruction.

In a possible implementation of the second aspect, the apparatus further includes a cache coupled to the dedicated processor. The method further includes: The dedicated processor reads task data of the first computing task from the cache; or the dedicated processor caches task data of the first computing task in the cache.

In a possible implementation of the second aspect, the cache is a cache of the general-purpose processor; or the general-purpose processor is coupled to the cache. The general-purpose processor and the dedicated processor share a same page table. The page table indicates a mapping relationship between a logical address and a physical address of the task data in the cache.

In a possible implementation of the second aspect, a software stack of the dedicated processor runs on the general-purpose processor. The method includes: The general-purpose processor sends an indication message to the dedicated processor by using the software stack, where the indication message indicates the dedicated processor to obtain a second instruction. For example, when an application running on the general-purpose processor generates a computing task, the application invokes the software stack, so that the software stack generates an indication message corresponding to the computing task, and then the general-purpose processor sends the indication message to the dedicated processor through a system bus. The indication message may be an interrupt signal. The general-purpose processor does not sense the second instruction. After receiving the indication message, the dedicated processor obtains the second instruction after parsing the indication message by using the software stack of the dedicated processor, and processes a second computing task based on the second instruction, where the second instruction is an instruction of the dedicated processor.

In a possible implementation of the second aspect, a computation amount of the first computing task is less than a computation amount of the second computing task.

In a possible implementation of the second aspect, the first computing task and the second computing task are two concurrent computing tasks.

In a possible implementation of the second aspect, the dedicated processor includes a control unit and at least one computing unit. The method further includes: When receiving a plurality of computing tasks, the control unit allocates the at least one computing unit to the plurality of computing tasks based on at least one preset parameter of the plurality of computing tasks. The plurality of computing tasks may include only a plurality of computing tasks instructed by one of the first instruction and the second instruction, or may include a plurality of computing tasks instructed by both the first instruction and the second instruction. The at least one preset parameter includes at least one of the following: a priority and a task type.

In a possible implementation of the second aspect, the at least one preset parameter includes the task type. The at least one computing unit includes a vector operation unit and a matrix operation unit. The method further includes: The vector operation unit processes a computing task whose task type is a vector operation in the plurality of computing tasks. The matrix operation unit processes a computing task whose task type is a matrix operation in the plurality of computing tasks.

In a possible implementation of the second aspect, the general-purpose processor includes a central processing unit CPU, a graphics processing unit GPU (for example, a CPU is integrated in the GPU) having a scheduling function, or a digital signal processor DSP having a scheduling function. The dedicated processor includes at least one of the following: a neural-network processing unit NPU, a digital signal processor DSP, and a graphics processing unit GPU.

Another aspect of this application provides a system on chip SoC. The computing task processing apparatus according to any one of the first aspect or the possible implementations of the first aspect is integrated in the SoC.

Another aspect of this application provides an electronic device. The electronic device includes the computing task processing apparatus according to any one of the first aspect or the possible implementations of the first aspect.

Another aspect of this application provides a computer-readable storage medium. The computer-readable storage medium stores instructions. When the instructions are run on a device, the device is enabled to perform the computing task processing method according to any one of the second aspect or the possible implementations of the second aspect.

Another aspect of this application provides a computer program product. The computer program product includes a computer program (which may also be referred to as code or instructions). When the computer program is run, a computer is enabled to perform the computing task processing method according to any one of the second aspect or the possible implementations of the second aspect.

It may be understood that for beneficial effects that can be achieved by any computing task processing method, electronic device, computer-readable storage medium, and computer program product provided above, refer to beneficial effects in the computing task processing apparatus provided above. Details are not described herein again.

### BRIEF DESCRIPTION OF DRAWINGS

FIG. 1 is a diagram of an architecture of a first processor;
FIG. 2 is a diagram of an architecture of a second processor;
FIG. 3 is a diagram of an architecture of a third processor;
FIG. 4 is a diagram of a structure of a computing task processing apparatus according to an embodiment of this application;
FIG. 5 is a diagram of reusing an NPU by a CPU according to an embodiment of this application;
FIG. 6 is another diagram of reusing an NPU by a CPU according to an embodiment of this application;
FIG. 7 is a diagram of a structure of an NPU according to an embodiment of this application; and
FIG. 8 is a diagram of another structure of a computing task processing apparatus according to an embodiment of this application.

### DESCRIPTION OF EMBODIMENTS

In this application, "at least one" means one or more, and "a plurality of" means two or more. The term "and/or" describes an association between associated objects, and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" are used for distinguishing between same objects or similar objects whose functions and purposes are substantially the same. For example, a first threshold and a second threshold are merely used for distinguishing between different thresholds, and an order thereof is not limited. A person skilled in the art may understand that the terms such as "first" and "second" do not limit a quantity and an execution sequence.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relative concept in a specific manner.

Before embodiments of this application are described below, related background technologies in this application are first described.

With the rapid development of an AI technology, more AI services are deployed on a terminal device. Therefore, requirements for a computing capability of a system on chip SoC in the terminal device become increasingly high. Currently, a dedicated processor such as an NPU or a digital signal processor (digital signal processor, DSP) that is suitable for an AI operation is usually integrated in the SoC. The dedicated processor usually includes a matrix operation unit and a vector operation unit. Certainly, in addition to the dedicated processor, a general-purpose processor such as a CPU or a graphics processing unit (graphics processing unit, GPU) can also process the AI operation. However, there is a difference in terms of energy efficiency, an area, flexibility, and the like between the general-purpose processor and the dedicated processor.

In addition, there are a large quantity of AI operation application scenarios and AI algorithms, and requirements for computing capabilities of different application scenarios and different AI algorithms vary greatly. For example, an image-type AI algorithm has a large computation amount (in other words, a high requirement for a computing capability); and some speech-type AI algorithms have a small computation amount (in other words, a low requirement for a computing capability), but have a high requirement on real-time performance. A difference between the two algorithms is as follows: The AI algorithm having a large computation amount has long operation time and is insensitive to scheduling latency, and scheduling latency is generally 500 microseconds (µs) to several milliseconds (ms). The AI algorithm having a small computation amount has short operation time, and the computing time is only hundreds of microseconds (µs) or within 1 ms. For the foregoing problems, FIG. 1 to FIG. 3 provide diagrams of architectures of several processors. The following separately describes the architectures of the several processors.

FIG. 1 is a diagram of an architecture of a first processor. The architecture includes two different processors that are coupled in a loose coupling manner. The architecture includes a system bus, a CPU, and an NPU. The CPU and the NPU are coupled to the system bus. A software stack runs on the CPU. The software stack includes an NPU driver located in a kernel, and NPU runtime and an application APP that are located in user space. The NPU includes a matrix operation unit and a vector operation unit. In the architecture, the CPU and the NPU may perform asynchronous execution. To be specific, the CPU and the NPU are simultaneously configured to execute different services. In addition, when the APP generates a computing task, the CPU may reuse a computing resource of the NPU based on the NPU driver and the NPU runtime in the software stack. A specific process may include: The CPU sends an interrupt signal to the NPU. When the NPU receives the interrupt signal, the NPU obtains a corresponding instruction from a memory after parsing the interrupt signal by using the software stack of the NPU, and processes the computing task based on the instruction. However, in this manner, the CPU needs to switch between a user mode and a kernel mode, and there are a large quantity of layers in the software stack. Consequently, overheads are high. This is not applicable to a scenario in which a CPU frequently interacts with an NPU.

FIG. 2 is a diagram of an architecture of a second processor. The architecture includes a processor, and a matrix operation unit is disposed in the processor. The architecture includes a CPU. The CPU includes a CPU core (core), and a matrix operation unit and a cache (cache) that are coupled to the CPU core. The matrix operation unit and the cache are also coupled to each other. When an AI operation needs to be processed, the CPU core may drive, according to a custom instruction, the matrix operation unit to run, to process the AI operation by using the matrix operation unit. The architecture has an advantage of low scheduling overheads, and is applicable to a scenario in which a CPU core frequently interacts with a matrix operation unit. However, the matrix operation unit can only be configured to process an AI operation having a small computation amount and some common rectangle operations, and cannot be configured to process an AI operation having a large computation amount.

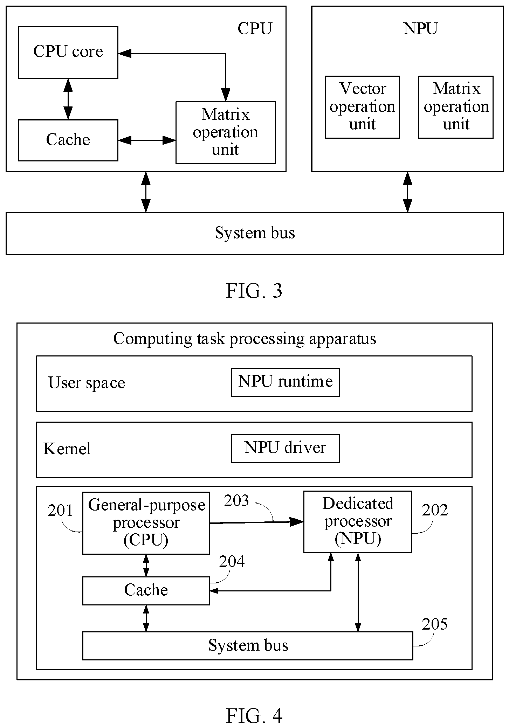

FIG. 3 is a diagram of an architecture of a third processor. The architecture is a combination of the foregoing two architectures. The architecture includes a system bus, a CPU, and an NPU. The CPU and the NPU are coupled to the system bus. A matrix operation unit is disposed in the CPU. A software stack runs on the CPU. The software stack includes an NPU driver located in a kernel, and NPU runtime and an application APP that are located in user space. The NPU includes a matrix operation unit and a vector operation unit. When an AI operation having a small computation amount needs to be processed, the CPU processes the AI operation according to a custom instruction to drive the internal matrix operation unit to run. When an AI operation having a large computation amount needs to be processed, the CPU processes the AI operation by reusing the matrix operation unit in the NPU by using the software stack. The architecture may be configured to process the AI operation having a small computation amount, or may be configured to process the AI operation having a large computation amount. However, in the architecture, the matrix operation units included in the CPU and the NPU are physically independent of each other, and therefore need to occupy a large area. In addition, the two matrix operation units cannot be simultaneously configured to process a same computing task, and consequently, computing resource utilization is reduced.

In view of this, an embodiment of this application provides a computing task processing apparatus. The computing task processing apparatus can be configured to process computing tasks having different computation amounts, and has low overheads when processing a computing task having a small computation amount. In addition, compared with the structure of the third processor, the apparatus can further reduce an occupied area and improve computing resource utilization. The computing task processing apparatus may be used in an electronic device. The electronic device includes but is not limited to a mobile phone, a tablet computer, a notebook computer, a palmtop computer, a mobile internet device (mobile internet device, MID), a wearable device (for example, a smartwatch or a smart band), a vehicle-mounted device (for example, a car, a bicycle, an electric vehicle, an aircraft, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an uncrewed aerial vehicle, or an aircraft), or the like.

The following describes a specific structure of the computing task processing apparatus.

FIG. 4 is a diagram of a structure of a computing task processing apparatus according to an embodiment of this application. The computing task processing apparatus includes a general-purpose processor 201 and a dedicated processor 202. The general-purpose processor 201 is coupled to the dedicated processor 202 through a physical interface 203.

In the computing task processing apparatus, the general-purpose processor 201 is configured to send a first instruction to the dedicated processor 202 through the physical interface 203, where the first instruction is an instruction that is in an instruction set of the general-purpose processor 201 and that is for the dedicated processor 202, and the first instruction instructs the dedicated processor 202 to process a first computing task. The dedicated processor 202 is configured to: receive the first instruction through the physical interface 203, execute the first instruction, and process the first computing task based on the first instruction. In other words, the general-purpose processor 201 may reuse the dedicated processor 202 through the physical interface 203 to process the first computing task.

The general-purpose processor 201 may include one or more of a central processing unit CPU or another processor having a scheduling function, for example, a graphics processing unit GPU (which may also be referred to as a macro GPU, for example, a GPU integrated with a CPU) having a scheduling function or a digital signal processor DSP having a scheduling function. The dedicated processor 202 may include one or more of a neural-network processing unit NPU, a digital signal processor DSP, and the like. The neural-network processing unit NPU may also be referred to as an artificial intelligence AI processor. The computing task processing apparatus may include one or more general-purpose processors 201 and one or more dedicated processors 202, and each processor may include one or more processing cores. In FIG. 4, an example in which the general-purpose processor 201 includes the CPU and the dedicated processor 202 includes the NPU is used for description.

In addition, the dedicated processor 202 may be configured to process an operation of data in a plurality of different dimensions. For example, the data in the plurality of different dimensions may include one-dimensional data (for example, a vector), two-dimensional data (for example, a matrix), and data in more than two dimensions (for example, three-dimensional data).

Then, compared with a current instruction set of the general-purpose processor 201, the first instruction may be an extended instruction (which may also be referred to as a custom instruction) of the general-purpose processor 201. The extended instruction can instruct (or referred to as "drive") the dedicated processor 202 to process a computing task. The first instruction may be generated by the general-purpose processor 201. The first computing task may be a computing task generated by an application (which may also be referred to as a service) running on the general-purpose processor 201. One application may generate one or more computing tasks, and each computing task may correspond to one thread. Optionally, the first computing task may be a computing task corresponding to an AI operation. The AI operation may be an operation of two-dimensional data, an operation of data in more than two dimensions, or the like.

Specifically, when an application on the general-purpose processor 201 generates a first computing task, the general-purpose processor 201 may obtain a first instruction in an execution process. The general-purpose processor 201 may send the first instruction to the dedicated processor 202 through the physical interface 203. When receiving and executing the first instruction, the dedicated processor 202 may process the first computing task (in other words, the first instruction is an instruction directly received by the dedicated processor through the physical interface, and is not an instruction obtained from a memory in a manner similar to software scheduling). In a process in which the dedicated processor 202 processes the first computing task, the general-purpose processor 201 may be in a waiting state. After the dedicated processor 202 completes processing of the first computing task, the general-purpose processor 201 may continue to perform a subsequent operation. The foregoing manner in which the general-purpose processor 201 reuses the dedicated processor 202 through the physical interface 203 to process the first computing task may be referred to as synchronously reusing of a computing resource of the dedicated processor 202.

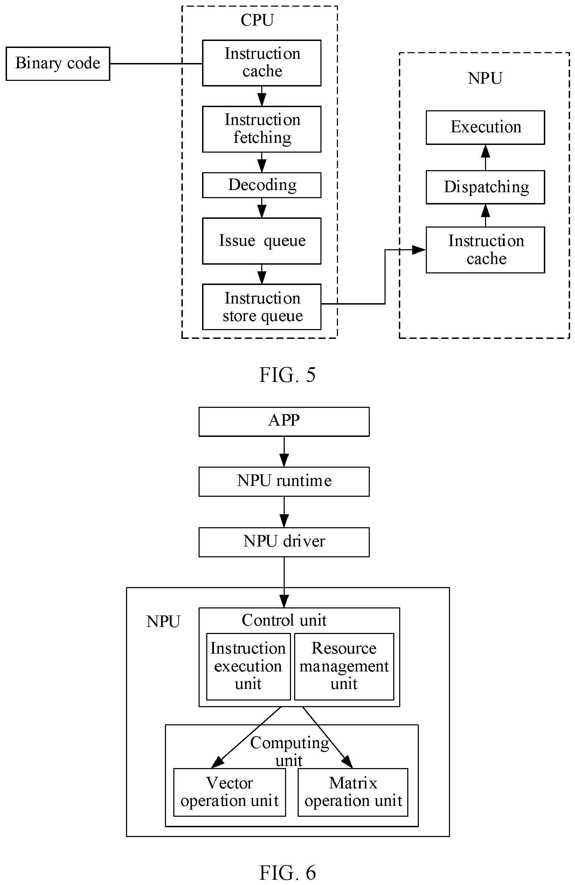

For example, as shown in FIG. 5, assuming that the general-purpose processor 201 is the CPU, and the dedicated processor 202 is the NPU, that the CPU reuses the NPU through the physical interface 203 may specifically include: The CPU loads a binary code (binary code) to an instruction cache (instruction cache), and performs instruction fetching (instruction fetching) and decoding (decoding) operations on the binary code. When the binary code includes an extended instruction, the decoding operation may be performed to identify the extended instruction. After the extended instruction is dispatched to an issue queue (issue queue) and to an instruction store queue (store queue), the CPU sends the extended instruction to an instruction buffer (instruction buffer) in the NPU through the physical interface 203, and the NPU completes decoding, dispatching (dispatching), and instruction execution (execution) processes, that is, processes a computing task corresponding to the extended instruction.

In the computing task processing apparatus provided in this embodiment of this application, the general-purpose processor 201 is coupled to the dedicated processor 202 at a physical layer through the physical interface 203, so that the general-purpose processor 201 can directly send the first instruction through the physical interface 203, to schedule the dedicated processor 202 to process the first computing task. In other words, the general-purpose processor 201 can reuse the dedicated processor 202 through the physical interface 203. A reusing process does not need to be implemented through software, so that overheads are low, thereby improving efficiency of interaction between the general-purpose processor 201 and the dedicated processor 202.

Further, as shown in FIG. 4, the computing task processing apparatus includes a cache (cache) 204. The cache 204 is coupled to the dedicated processor 202, so that the dedicated processor 202 can be configured to store data in the cache 204 and read data in the cache 204.

Optionally, the cache 204 is a cache integrated in the general-purpose processor 201. For example, the general-purpose processor 201 is a CPU including three levels of caches (to be specific, an L1 cache to an L3 cache), and the cache 204 may be the L3 cache. Alternatively, the cache 204 is a cache integrated outside the general-purpose processor 201, and the general-purpose processor 201 is coupled to the cache 204. In other words, the general-purpose processor 201 may be configured to store data in the cache 204 and read data in the cache 204. In FIG. 4, an example in which the cache 204 is integrated outside the general-purpose processor 201 is used for description.

In a possible embodiment, the cache 204 stores first task data of the first computing task. The first task data may be input data required for processing the first computing task (in other words, the data is data that needs to be used in a process in which the dedicated processor 202 executes the first instruction). In this case, the dedicated processor 202 is further configured to read the first task data from the cache 204 in the process of processing the first computing task. Optionally, the first task data may be data stored in the cache 204 by the general-purpose processor 201.

In another possible embodiment, the dedicated processor 202 generates second task data in the process of processing the first computing task, and the second task data may be output data for processing the first computing task (in other words, the data is data that is correspondingly output after the dedicated processor 202 executes the first instruction). In this case, the dedicated processor 202 is further configured to store the second task data in the cache 204. Optionally, the general-purpose processor 201 may read the second task data from the cache 204.

Optionally, the general-purpose processor 201 and the dedicated processor 202 may share a same page table. The page table may indicate a mapping relationship between a logical address and a physical address of the first task data in the cache 204 and/or a mapping relationship between a logical address and a physical address of the second task data in the cache 204. In this way, when the general-purpose processor 201 and the dedicated processor 202 read data in the cache 204 or store data in the cache 204, no additional address translation needs to be performed, so that power consumption can be reduced and data read/write efficiency can be improved.

Optionally, the computing task processing apparatus may further include a system bus 205. Both the cache 204 and the dedicated processor 202 are coupled to the system bus 205. In addition, the computing task processing apparatus may further include a memory. For example, the memory may be a double data rate synchronous dynamic random access memory (double data rate synchronous dynamic random access memory, DDR SRAM), DDR for short. The dedicated processor 202 may further access the memory by using the cache 204, or may access the memory without using the cache 204. In other words, the dedicated processor 202 has an independent channel for accessing the memory without using the cache 204.

Further, as shown in FIG. 4, a software stack of the dedicated processor 202 runs on the general-purpose processor 201. The software stack may include runtime and a driver of the dedicated processor 202. In FIG. 4, an example in which the software stack includes NPU runtime and an NPU driver is used for description.

Specifically, the general-purpose processor 201 is further configured to send an indication message to the dedicated processor 202 by using the software stack, where the indication message indicates the dedicated processor to obtain a second instruction, and the second instruction is an instruction in an instruction set of the dedicated processor 202. The general-purpose processor does not sense the second instruction. For example, when an application running on the general-purpose processor 201 generates a computing task, the application invokes the software stack, so that the software stack generates an indication message corresponding to the computing task, and then the general-purpose processor 201 sends the indication message to the dedicated processor 202 through the system bus. The indication message may be an interrupt signal. The dedicated processor 202 is further configured to: after receiving the indication message, obtain the second instruction (for example, obtain the second instruction from the memory) by using the software stack of the dedicated processor 202, and process a second computing task based on the second instruction. In other words, the general-purpose processor 201 may further reuse the computing resource of the dedicated processor 202 based on the software stack. In a process in which the dedicated processor 202 processes the second computing task, the general-purpose processor 201 may continue to perform another task. After the dedicated processor 202 completes processing of the second computing task, the dedicated processor 202 sends an interrupt to the general-purpose processor 201. In this way, the general-purpose processor 201 may continue to perform a subsequent operation corresponding to the second computing task when receiving the interrupt. The foregoing manner in which the general-purpose processor 201 reuses the dedicated processor 202 based on the software stack to process the second computing task may be referred to as asynchronously reusing the computing resource of the dedicated processor 202.

The second computing task may be a computing task generated by an application (which may also be referred to as a service) running on the general-purpose processor 201. The first computing task and the second computing task may be two computing tasks generated by a same application, or may be two computing tasks generated by different applications. The second computing task may be a computing task corresponding to an AI operation.

For example, with reference to FIG. 4, as shown in FIG. 6, when an APP running on the CPU generates a second computing task, and the CPU needs to reuse the computing resource of the NPU to process the second computing task, the APP may send the second computing task to the NPU by using the NPU runtime and the NPU driver, so that the NPU processes the second computing task.

Optionally, a computation amount of the first computing task is less than a computation amount of the second computing task. To be specific, when the general-purpose processor 201 needs to reuse the dedicated processor 202 to process computing tasks having different computation amounts, the general-purpose processor 201 may reuse the dedicated processor 202 through the physical interface 203 to process a computing task having a small computation amount, and reuse the dedicated processor 202 by using the software stack to process a computing task having a large computation amount. This is because a manner of reusing the dedicated processor 202 by using the software stack is applicable to the computing task having a large computation amount, generally requires long computing time, and is insensitive to scheduling latency. However, a manner of reusing the dedicated processor 202 through the physical interface 203 is applicable to the computing task having a small computation amount, requires short computing time, and is sensitive to scheduling latency.

During actual application, the general-purpose processor 201 may simultaneously reuse the dedicated processor 202 based on the foregoing two manners to process computing tasks having different computation amounts, or may reuse the dedicated processor 202 in a time division manner to process the computing tasks having different computation amounts. In an embodiment, when the first computing task and the second computing task are two concurrent computing tasks, the general-purpose processor 201 processes the first computing task in the manner of reusing the dedicated processor 202 through the physical interface 203, and processes the second computing task in the manner of reusing the dedicated processor 202 by using the software stack.

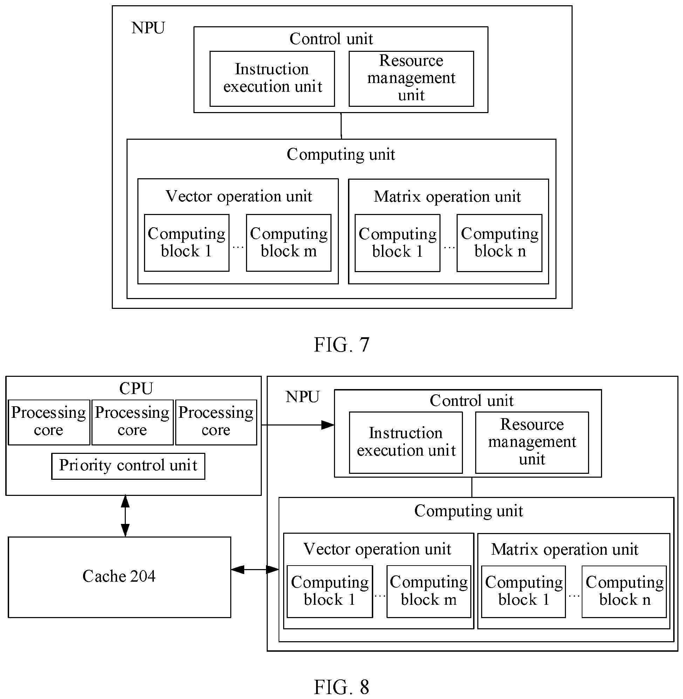

Further, when there are a plurality of concurrent computing tasks, a computing resource management mechanism is required to ensure normal running of the plurality of computing tasks. The plurality of computing tasks may include only the computing tasks received by the dedicated processor 202 in any one of the foregoing two manners, or may include the computing tasks received by the dedicated processor 202 in both the foregoing two manners. Specifically, as shown in FIG. 7, the dedicated processor 202 may include a control unit and a computing unit. There may be one or more computing units. The control unit may be responsible for managing the computing unit.

Optionally, the control unit may include a resource management unit and an instruction execution unit. The resource management unit may be configured to: manage and allocate the computing unit. The instruction execution unit may be responsible for functions such as instruction caching, fetching, and decoding. The computing unit may include one or more computing units in different dimensions. For example, the computing unit may include a vector operation unit and a matrix operation unit. The following mainly describes a function of the control unit in terms of resource management by using the control unit as the description subject.

In a possible embodiment, the control unit is configured to: when receiving a plurality of computing tasks, allocate at least one computing unit to the plurality of computing tasks based on at least one preset parameter of the plurality of computing tasks. The plurality of computing tasks include the first computing task. The at least one preset parameter includes at least one of the following: a priority and a task type. The following uses several examples for description.

In an example, when the at least one preset parameter includes the priority, and the control unit receives a plurality of computing tasks, the control unit allocates the at least one computing unit to the plurality of computing tasks in descending order of priorities of the plurality of computing tasks. If a computation amount that can be processed by the at least one computing unit is less than computation amounts of the plurality of computing tasks, the control unit may preferentially allocate the at least one computing unit to a computing task having a high priority, and after the at least one computing unit completes the computing task having a high priority, the control unit then allocates the at least one computing unit to a computing task having a low priority.

Optionally, each of the at least one computing unit may include a plurality of computing blocks. All of the plurality of computing blocks may have a same computing capability or different computing capabilities. One or more computing blocks may be configured to process one computing task. When allocating the computing blocks in the computing unit based on the priorities or the computation amounts of the computing tasks, the control unit may allocate, to each computing task based on the computation amount of the computing task, one or more computing blocks that match the computing capability.

In addition, when each computing unit includes a plurality of computing blocks, at least one of the plurality of computing blocks may be statically configured to process a computing task that is in the manner of reusing the dedicated processor 202 through the physical interface 203. Certainly, the at least one computing block may alternatively be configured to process a computing task that is in the manner of reusing the dedicated processor 202 by using the software stack.

It should be noted that a priority and a computation amount of a computing task may be determined based on the computing task. For example, when the computing task is generated, the priority and the computation amount of the computing task are correspondingly determined. When the at least one preset parameter includes at least two parameters, the at least two parameters may be comprehensively used to determine an order of allocating a computing unit by the control unit to each computing task.

Optionally, as shown in FIG. 8, the general-purpose processor 201 may include a priority control unit. The priority control unit may be configured to support setting and querying of a priority of a computing task. The control unit in the dedicated processor 202 may support allocating a computing unit based on a priority. The priority control unit may provide an interface such as a register, to allow service software to configure a priority, and may further maintain a priority queue that is allowed to be queried. For the control unit in the dedicated processor 202, when a service having a high priority needs to use a computing unit, the control unit may control a running service having a low priority and perform switching, to preferentially schedule the service having a high priority. For example, a priority is set for a service in the general-purpose processor 201 by using a thread as a granularity. In this way, the control unit in the dedicated processor 202 can ensure that a computing unit is preferentially allocated to a thread having a high priority, and a thread having a low priority may sleep (sleep) if the computing unit is not allocated to the thread. After the computing unit is released, the thread having a low priority is woken up again and the computing unit is allocated to the thread. In FIG. 8, an example in which the general-purpose processor 201 is the CPU and includes a plurality of processing cores is used for description.

In another example, when the at least one preset parameter includes the task type, and the computing unit includes a vector operation unit and a matrix operation unit, the control unit is further configured to: allocate a computing task whose task type is a vector operation in the plurality of computing tasks to the vector operation unit, and allocate a computing task whose task type is a matrix operation in the plurality of computing tasks to the matrix operation unit. Correspondingly, the vector operation unit is configured to process the computing task whose task type is a vector operation in the plurality of computing tasks, and the matrix operation unit is configured to process the computing task whose task type is a matrix operation in the plurality of computing tasks. In FIG. 7, an example in which the vector operation unit includes m computing blocks and the matrix operation unit includes n computing blocks is used for description, where m and n are positive integers.

It should be noted that when the at least one preset parameter includes the task type and further includes the priority, the control unit may first determine, based on the task type, a type of a computing unit allocated to a computing task, and then allocate the computing unit of the corresponding type in an order determined based on the priority.

In this embodiment of this application, the control unit may allocate the computing unit to the plurality of computing tasks based on the at least one preset parameter, so that when the plurality of computing tasks are concurrent and computing resources are limited, it can be ensured that a computing task having a high priority or a small computation amount is preferentially processed, and a computing task having a low priority or a large computation amount is processed later. In this way, the computing task having a high priority or a small computation amount has low processing latency and high processing efficiency.

An embodiment of this application further provides a computing task processing method. The method may be applied to the computing task processing apparatus provided above. The apparatus includes a general-purpose processor and a dedicated processor. The general-purpose processor is coupled to the dedicated processor through a physical interface. For detailed descriptions of the apparatus, refer to the foregoing related descriptions.

Specifically, the method includes: The general-purpose processor sends a first instruction to the dedicated processor through the physical interface, where the first instruction instructs the dedicated processor to process a first computing task, and the first instruction may be an instruction that is in an instruction set of the general-purpose processor and that is for the dedicated processor. The dedicated processor receives the first instruction through the physical interface, executes the first instruction (in other words, the first instruction is an instruction directly received by the dedicated processor through the physical interface, and is not an instruction obtained from a memory in a manner similar to software stack scheduling), and processes the first computing task based on the first instruction.

Optionally, when the apparatus further includes a cache coupled to the dedicated processor, the method may further include: The dedicated processor reads task data of the first computing task from the cache; or the dedicated processor caches task data of the first computing task in the cache.

In an embodiment, the cache is a cache of the general-purpose processor. In another embodiment, the general-purpose processor is coupled to the cache.

During actual application, the general-purpose processor and the dedicated processor share a same page table. The page table indicates a mapping relationship between a logical address and a physical address of the task data in the cache.

Further, a software stack of the dedicated processor runs on the general-purpose processor. The method may further include: The general-purpose processor sends an indication message to the dedicated processor by using the software stack, where the indication message indicates the dedicated processor to obtain a second instruction. For example, when an application running on the general-purpose processor generates a computing task, the application invokes the software stack, so that the software stack generates an indication message, and then the general-purpose processor sends the indication message to the dedicated processor through a system bus. The indication message may be an interrupt signal. The general-purpose processor does not sense the second instruction. The dedicated processor is further configured to: after receiving the indication message, obtain the second instruction (for example, obtain the second instruction from the memory) after parsing the indication message by using software f the dedicated processor, and process a second computing task based on the second instruction, where the second instruction is an instruction in an instruction set of the dedicated processor.

Optionally, a computation amount of the first computing task is less than a computation amount of the second computing task. In an embodiment, the first computing task and the second computing task are two concurrent computing tasks.

Further, the dedicated processor includes a control unit and at least one computing unit. The method may further include: When receiving a plurality of computing tasks, the control unit allocates the at least one computing unit to the plurality of computing tasks based on at least one preset parameter of the plurality of computing tasks. The plurality of computing tasks may include only a plurality of computing tasks instructed by one of the first instruction and the second instruction, or may include a plurality of computing tasks instructed by both the first instruction and the second instruction. The at least one preset parameter includes at least one of the following: a priority and a task type.

In an embodiment, the at least one preset parameter includes the task type. The at least one computing unit includes a vector operation unit and a matrix operation unit. The method further includes: The vector operation unit processes a computing task whose task type is a vector operation in the plurality of computing tasks. The matrix operation unit processes a computing task whose task type is a matrix operation in the plurality of computing tasks.

It should be noted that for detailed descriptions of the foregoing steps, refer to the descriptions in the computing task processing apparatus provided above. Details are not described herein again in this embodiment of this application.

In this embodiment of this application, the general-purpose processor is coupled to the dedicated processor at a physical layer through the physical interface, so that the general-purpose processor can directly send the first instruction through the physical interface, to schedule the dedicated processor to process the first computing task. In other words, the general-purpose processor can reuse the dedicated processor through the physical interface. A reusing process does not need to be implemented by using software, so that overheads are low, thereby improving efficiency of interaction between the general-purpose processor and the dedicated processor.

Another aspect of this application further provides a system on chip SoC. Any computing task processing apparatus provided above is integrated in the SoC.

Another aspect of this application further provides an electronic device. The electronic device includes any computing task processing apparatus provided above.

Still another aspect of this application provides a computer-readable storage medium. The computer-readable storage medium stores instructions. When the instructions are run on a device, the device is enabled to perform the computing task processing method provided in the foregoing method embodiment.

Still another aspect of this application provides a computer program product. When the computer program product runs on a device, the device is enabled to perform any computing task processing method provided in the foregoing method embodiment.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A computing task processing apparatus, wherein the apparatus comprises: a general-purpose processor and a dedicated processor, wherein the general-purpose processor is coupled to the dedicated processor through a physical interface;
the general-purpose processor is configured to send a first instruction to the dedicated processor through the physical interface, wherein the first instruction is an instruction that is in an instruction set of the general-purpose processor and that is for the dedicated processor, and the first instruction instructs the dedicated processor to process a first computing task; and
the dedicated processor is configured to: receive the first instruction through the physical interface, execute the first instruction, and process the first computing task based on the first instruction.

2. The apparatus according to claim 1, wherein the apparatus further comprises: a cache coupled to the dedicated processor, wherein
the cache is configured to store task data of the first computing task; and
the dedicated processor is configured to: read the task data from the cache and/or cache the task data in the cache.

3. The apparatus according to claim 2, wherein the cache is a cache of the general-purpose processor; or
the general-purpose processor is coupled to the cache.

4. The apparatus according to claim 3, wherein the general-purpose processor and the dedicated processor share a same page table, and the page table indicates a mapping relationship between a logical address and a physical address of the task data in the cache.

5. The apparatus according to any one of claims 1 to 4, wherein a software stack of the dedicated processor runs on the general-purpose processor;
the general-purpose processor is further configured to send an indication message to the dedicated processor by using the software stack, wherein the indication message indicates the dedicated processor to obtain a second instruction; and
the dedicated processor is further configured to: after receiving the indication message, obtain the second instruction after parsing the indication message by using the software stack of the dedicated processor, and process a second computing task based on the second instruction, wherein
the second instruction is an instruction in an instruction set of the dedicated processor.

6. The apparatus according to claim 5, wherein a computation amount of the first computing task is less than a computation amount of the second computing task.

7. The apparatus according to claim 5 or 6, wherein the first computing task and the second computing task are two concurrent computing tasks.

8. The apparatus according to any one of claims 1 to 7, wherein the dedicated processor comprises: a control unit and at least one computing unit; and
the control unit is configured to: when receiving a plurality of computing tasks, allocate the at least one computing unit to the plurality of computing tasks based on at least one preset parameter of the plurality of computing tasks, wherein
the at least one preset parameter comprises at least one of the following: a priority and a task type.

9. The apparatus according to claim 8, wherein the at least one preset parameter comprises the task type, and the at least one computing unit comprises:
a vector operation unit, configured to process a computing task whose task type is a vector operation in the plurality of computing tasks; and
a matrix operation unit, configured to process a computing task whose task type is a matrix operation in the plurality of computing tasks.

10. The apparatus according to any one of claims 1 to 9, wherein the general-purpose processor comprises a central processing unit CPU, and the dedicated processor comprises at least one of the following: a neural-network processing unit NPU and a digital signal processor DSP.

11. The apparatus according to any one of claims 1 to 10, wherein the apparatus is integrated in a system on chip SoC.

12. A computing task processing method, applied to an apparatus comprising a general-purpose processor and a dedicated processor, wherein the general-purpose processor is coupled to the dedicated processor through a physical interface, and the method comprises:
sending, by the general-purpose processor, a first instruction to the dedicated processor through the physical interface, wherein the first instruction is an instruction that is in an instruction set of the general-purpose processor and that is for the dedicated processor, and the first instruction instructs the dedicated processor to process a first computing task; and
receiving, by the dedicated processor, the first instruction through the physical interface, executing the first instruction, and processing the first computing task based on the first instruction.

13. The method according to claim 12, wherein the apparatus further comprises a cache coupled to the dedicated processor, and the method further comprises:
reading, by the dedicated processor, task data of the first computing task from the cache; or
caching, by the dedicated processor, task data of the first computing task in the cache.

14. The method according to claim 13, wherein the cache is a cache of the general-purpose processor; or
the general-purpose processor is coupled to the cache.

15. The method according to claim 14, wherein the general-purpose processor and the dedicated processor share a same page table, and the page table indicates a mapping relationship between a logical address and a physical address of the task data in the cache.

16. The method according to any one of claims 12 to 14, wherein a software stack of the dedicated processor runs on the general-purpose processor, and the method comprises:
sending, by the general-purpose processor, an indication message to the dedicated processor by using the software stack, wherein the indication message indicates the dedicated processor to obtain a second instruction; and
after receiving the indication message, obtaining, by the dedicated processor, the second instruction after parsing the indication message by using the software stack of the dedicated processor, and processing a second computing task based on the second instruction, wherein
the second instruction is an instruction in an instruction set of the dedicated processor.

17. The method according to claim 16, wherein a computation amount of the first computing task is less than a computation amount of the second computing task.

18. The method according to claim 16 or 17, wherein the first computing task and the second computing task are two concurrent computing tasks.

19. The method according to any one of claims 12 to 18, wherein the dedicated processor comprises a control unit and at least one computing unit, and the method further comprises:
when receiving a plurality of computing tasks, allocating, by the control unit, the at least one computing unit to the plurality of computing tasks based on at least one preset parameter of the plurality of computing tasks, wherein
the at least one preset parameter comprises at least one of the following: a priority and a task type.

20. The method according to claim 19, wherein the at least one preset parameter comprises the task type, the at least one computing unit comprises a vector operation unit and a matrix operation unit, and the method further comprises:
processing, by the vector operation unit, a computing task whose task type is a vector operation in the plurality of computing tasks; and
processing, by the matrix operation unit, a computing task whose task type is a matrix operation in the plurality of computing tasks.

21. The method according to any one of claims 12 to 20, wherein the general-purpose processor comprises a central processing unit CPU, and the dedicated processor comprises at least one of the following: a neural-network processing unit NPU and a digital signal processor DSP.

22. An electronic device, wherein the electronic device comprises the computing task processing apparatus according to any one of claims 1 to 11.
